# FASCICULE DE BREVET EUROPEEN

(11) **EP 3 706 151 B1**
(45) Date de publication et mention de la délivrance du brevet: **03.05.2023**
(21) Numéro de dépôt: 20161599.4
(22) Date de dépôt: 06.03.2020
(51) Int. Cl.: H01H 33/26, B60L 3/04, H01H 33/66, H01H 33/668

(54) **DISJONCTEUR À INTERRUPTEUR À VIDE COMPORTANT UN SYSTÈME DE COMMANDE, ET VÉHICULE FERROVIAIRE COMPORTANT UN TEL DISJONCTEUR**
LEISTUNGSSCHALTER MIT VAKUUMTRENNSCHALTER, DER EIN STEUERSYSTEM UMFASST, UND SCHIENENFAHRZEUG, DAS EINEN SOLCHEN LEISTUNGSSCHALTER UMFASST
CIRCUIT BREAKER WITH VACUUM SWITCH COMPRISING A CONTROL SYSTEM AND RAILWAY VEHICLE COMPRISING SUCH A CIRCUIT BREAKER

(30) Priorité: 08.03.2019 FR 1902372
(43) Date de publication de la demande: 09.09.2020
(73) Titulaire: ALSTOM Transport Technologies, 93400 Saint-Ouen-sur Seine (FR)
(72) Inventeur: QUENTIN, Nicolas, 65420 Ibos (FR)
(74) Mandataire: Lavoix

(56) Documents cités:
- WO-A1-95/27297
- CN-A- 105 390 334
- DD-A1- 265 968
- DE-A1- 2 316 099
- US-A- 5 912 604

## Description

La présente invention concerne un disjoncteur à interrupteur à vide comportant un premier contact électrique et un deuxième contact électrique propres à être, dans une configuration fermée du disjoncteur, en contact l'un avec l'autre pour permettre le passage d'un courant électrique dans l'interrupteur à vide et, dans une configuration ouverte du disjoncteur, à l'écart l'un de l'autre pour s'opposer au passage du courant électrique, le premier contact étant destiné à être relié à une source de tension électrique.

L'invention concerne également un véhicule ferroviaire comprenant un tel disjoncteur.

Le disjoncteur est en général associé à un actionneur adapté pour mettre le disjoncteur dans la configuration ouverte si un courant électrique traversant le disjoncteur dépasse un seuil prédéterminé.

Un tel disjoncteur est par exemple disposé dans un circuit électrique d'alimentation d'un véhicule ferroviaire fonctionnant à l'énergie électrique pour protéger le circuit électrique d'alimentation en cas de court-circuit.

Le premier contact et le deuxième contact s'étendent au moins en partie dans une chambre à vide assurant que, dans la configuration ouverte, le courant électrique ne puisse plus passer du premier contact vers le deuxième contact malgré une différence de potentiel importante, par exemple de 25 kV, entre les deux contacts.

Néanmoins, en cas de perte du vide de la chambre à vide, l'isolation électrique entre les deux contacts n'est plus assurée. Ce problème est en général détecté au niveau d'un transformateur de tension du circuit électrique en aval du disjoncteur. Plus précisément, bien que le disjoncteur soit dans la configuration ouverte, on mesure un courant électrique dans le primaire de ce transformateur, et une tension électrique au secondaire du transformateur. Ces deux mesures sont analysées par le véhicule ferroviaire, qui prend éventuellement la décision d'abaisser le pantographe du véhicule afin d'interrompre l'alimentation électrique et donc le courant électrique mesuré.

Une telle technologie donne satisfaction. Toutefois, la détection de la perte de vide dépend de l'analyse réalisée par le système de pilotage du véhicule ferroviaire, avec les éventuels aléas que cela comporte.

DE 2316099 A1 divulgue un disjoncteur avec des interrupteurs à vide et un système de détection de l'état de vide selon le préambule de la revendication 1.

Un but de l'invention est donc de permettre une détection plus robuste et autonome de la perte de vide dans l'interrupteur à vide.

A cet effet, l'invention a pour objet un disjoncteur du type décrit ci-dessus selon la revendication 1.

Selon des modes de réalisation particuliers, le disjoncteur comprend l'une ou plusieurs des caractéristiques suivantes, prise(s) isolément ou selon toutes les combinaisons techniquement possibles :
- le deuxième module est adapté pour générer un deuxième signal si le disjoncteur est dans la configuration ouverte, et le système de commande comporte en outre une unité logique reliée au premier module et au deuxième module pour recevoir respectivement le premier signal et le deuxième signal, et configurée pour générer le signal de commande si l'unité logique reçoit le premier signal et le deuxième signal ;
- le deuxième module est relié au premier module pour recevoir le premier signal, et est adapté pour produire le signal de commande si le deuxième module reçoit le premier signal et le disjoncteur est dans la configuration ouverte ;
- le deuxième module est adapté pour transmettre le premier signal si le premier contact et le deuxième contact sont dans la configuration ouverte, le premier signal transmis par le deuxième module formant le signal de commande ;
- le premier module comprend un diviseur de tension adapté pour fournir une tension divisée proportionnelle à la tension sensiblement non nulle détectée, la tension divisée formant le premier signal ;
- le deuxième module comprend un contact électrique auxiliaire comportant une entrée et une sortie, le contact électrique auxiliaire étant configuré pour être électriquement passant entre l'entrée et la sortie lorsque le disjoncteur est dans la configuration ouverte, et non passant électriquement lorsque le disjoncteur est dans la configuration fermée ;
- une enveloppe isolante délimitant un logement dans lequel l'interrupteur à vide est au moins partiellement reçu, le premier module et le deuxième module étant situés dans le logement ;
- le disjoncteur comporte une enveloppe isolante présentant une forme allongée selon un axe (D),
- l'interrupteur à vide comprend une première borne en contact électrique avec le premier contact, et une deuxième borne en contact électrique avec le deuxième contact,
- le premier module et le deuxième module sont situés axialement, par rapport à la deuxième borne, du côté opposé à la première borne.

L'invention a également pour objet un véhicule ferroviaire comprenant un dispositif de captage de courant électrique à partir d'une ligne d'alimentation, et un disjoncteur tel que décrit ci-dessus, le premier contact étant connecté électriquement au dispositif de captage pour recevoir le courant électrique dans la configuration fermée, le véhicule ferroviaire comprenant :
- un actionneur connecté au système de commande pour recevoir le signal de commande, l'actionneur étant adapté pour déconnecter le dispositif de captage de ladite ligne d'alimentation si l'actionneur reçoit le signal de commande, et/ou
- un interrupteur commandé connecté électriquement au deuxième contact et à un réseau électrique du véhicule ferroviaire, l'interrupteur commandé étant mobile entre une configuration fermée, dans laquelle le réseau électrique est connecté électriquement au deuxième contact via l'interrupteur commandé, et une configuration ouverte, dans laquelle le réseau électrique est isolé électriquement du deuxième contact, l'interrupteur commandé étant connecté au système de commande pour recevoir le signal de commande, et étant adapté pour passer de sa configuration fermée à sa configuration ouverte si l'interrupteur commandé reçoit le signal de commande.

Selon un mode particulier, l'interrupteur commandé comprend un interrupteur à vide, deux contacts électriques, et un actionneur configuré pour déplacer l'interrupteur commandé de sa configuration fermée à sa configuration ouverte si l'actionneur reçoit le signal de commande.

L'invention sera mieux comprise à la lecture de la description qui va suivre, donnée uniquement à titre d'exemple et faite en se référant aux dessins annexés, sur lesquels :
[Fig 1] la figure 1 est une vue schématique, partielle, d'un véhicule ferroviaire comportant un disjoncteur selon l'invention,
[Fig 2] la figure 2 est une vue schématique, partiellement en coupe, d'un disjoncteur selon un premier mode de réalisation de l'invention, et
[Fig 3] la figure 3 est une vue schématique, partiellement en coupe, d'un disjoncteur selon un deuxième mode de réalisation de l'invention, et d'un interrupteur connecté au disjoncteur.

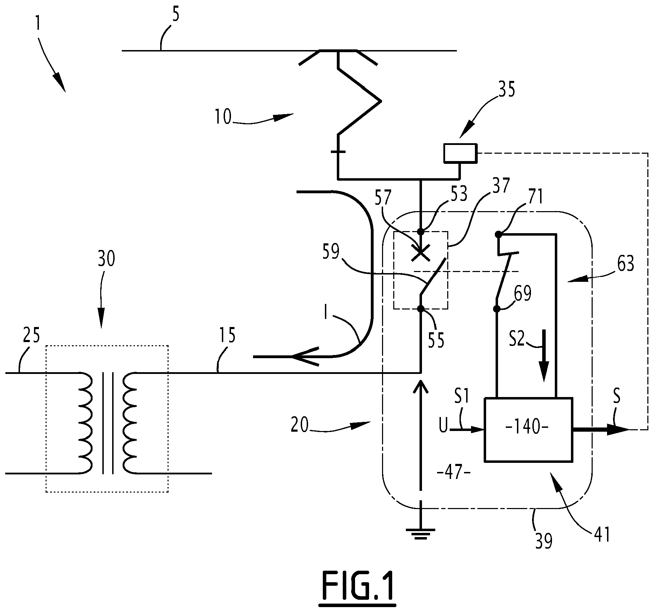

En référence à la figure 1, on décrit un véhicule ferroviaire 1 selon un premier mode de réalisation de l'invention.

Le véhicule ferroviaire 1 est par exemple un train à grande vitesse, un train suburbain, un métro ou un tramway.

Le véhicule ferroviaire 1 est adapté pour fonctionner à l'énergie électrique et est par exemple configuré pour être alimenté électriquement à partir d'une ligne d'alimentation 5, telle qu'une caténaire.

Le véhicule ferroviaire 1 comprend un dispositif de captage 10 pour capter un courant électrique l à partir de la ligne d'alimentation 5, un circuit à haute tension 15, et un disjoncteur 20 reliant électriquement le circuit à haute tension au dispositif de captage.

Le véhicule ferroviaire comprend au moins un circuit à tension réduite 25 également appelé circuit à basse tension relié au circuit à haute tension 15 par un transformateur 30.

Dans l'exemple représenté, le véhicule ferroviaire comprend aussi un actionneur 35 adapté pour déconnecter le dispositif de captage 10 de la ligne d'alimentation 5 si l'actionneur reçoit un signal de commande S en provenance du disjoncteur 20.

Le dispositif de captage 10 est par exemple un pantographe.

L'actionneur 35 est adapté pour abaisser le pantographe en cas de réception du signal de commande S.

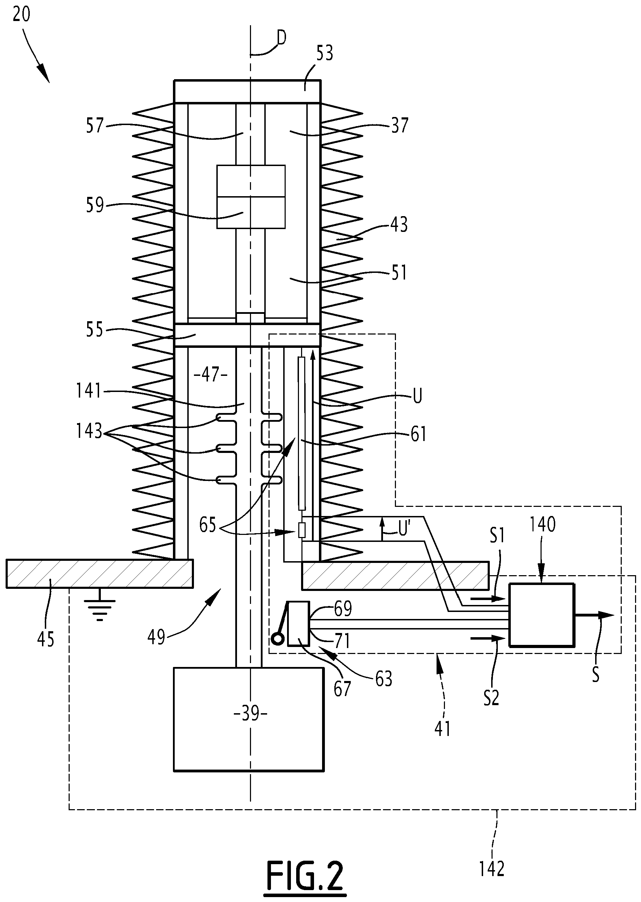

Le disjoncteur 20 comprend un interrupteur à vide 37 (représenté de façon plus réaliste sur la figure 2), un actionneur 39 adapté pour agir sur l'interrupteur à vide, et un système de commande 41 adapté pour produire le signal de commande S. Avantageusement, le disjoncteur comprend une enveloppe isolante 43 et un support 45 sur lequel l'enveloppe isolante est fixée et permettant de fixer le disjoncteur à des structures (non représentées) du véhicule ferroviaire, par exemple le toit.

L'enveloppe isolante 43 délimite un logement 47 dans lequel l'interrupteur à vide 37 est au moins partiellement reçu. Dans l'exemple représenté, l'enveloppe isolante présente une forme allongée selon un axe D. L'enveloppe isolante est par exemple cylindrique.

Le support 45 est relié à une masse électrique. Le support est par exemple une plaque de base avantageusement fixée sur une extrémité de l'enveloppe isolante 43 selon l'axe D. Le support définit un orifice 49 traversé axialement par une tige de commande 141 raccordée à l'actionneur 39.

L'interrupteur à vide 37 (ou « ampoule à vide ») s'étend par exemple axialement à une extrémité de l'enveloppe isolante opposée au support 45. L'interrupteur à vide 37 comprend une chambre à vide 51 formant une première borne 53 connectée électriquement au dispositif de captage 10, et une deuxième borne 55 connectée électriquement au circuit à haute tension 15. L'interrupteur à vide 37 comprend un premier contact 57 électrique et un deuxième contact 59 électrique s'étendant axialement à l'intérieur de la chambre à vide 51.

La première borne 53 est par exemple fixée sur une extrémité axiale de l'enveloppe isolante opposée au support 45 selon l'axe D.

La deuxième borne 55 est située axialement du côté de l'actionneur 39 par rapport à la première borne 53.

La première borne 53 et la deuxième borne 55 délimitent axialement la chambre à vide 51, qui est délimitée radialement par l'enveloppe isolante 43.

Le premier contact 57 et le deuxième contact 59 sont mobiles l'un par rapport à l'autre entre une configuration fermée du disjoncteur (représentée sur la figure 2), dans laquelle le premier contact et le deuxième contact sont en contact l'un avec l'autre pour permettre le passage du courant électrique l dans l'interrupteur à vide 37, et une configuration ouverte du disjoncteur (symbolisée sur la figure 1), dans laquelle le premier contact et le deuxième contact sont à l'écart l'un de l'autre pour s'opposer au passage du courant électrique.

Le premier contact 57 est en contact électrique avec la première borne 53.

Le deuxième contact 59 est en contact électrique avec la deuxième borne 55.

Dans l'exemple représenté, le deuxième contact 59 est relié mécaniquement à l'actionneur 39 par la tige de commande 141.

La tige 141 comporte par exemple au moins une ailette 143, de préférence plusieurs ailettes 143, s'étendant en saillie radialement par rapport à la tige 141. La ou les ailette(s) 143 limite(nt) le risque de propagation d'un arc électrique à la surface de la tige 141.

Le premier contact 57 est fixe par rapport à la chambre à vide 51, tandis que le deuxième contact 59 est mobile en translation axiale par rapport à la chambre à vide sous l'action de l'actionneur 39.

Le système de commande 41 est adapté pour produire le signal de commande S si, d'une part, une tension non nulle U existe entre le deuxième contact 59 et le support 45 et, d'autre part, le premier contact et le deuxième contact sont dans la configuration ouverte. Ainsi, le signal de commande S est représentatif du fait qu'une tension non nulle U existe entre le deuxième contact et la masse, alors que le disjoncteur 20 est dans la configuration ouverte, c'est-à-dire représentatif d'un problème de vide dans la chambre à vide 51.

Le système de commande 41 comprend un premier module 61 adapté pour générer un premier signal S1 si la tension non nulle U existe entre le deuxième contact 59 et le support 45, un deuxième module 63 adapté pour détecter si le premier contact et le deuxième contact sont dans la configuration ouverte, et, dans le mode de réalisation représenté sur la figure 2, une unité logique 140 reliée au premier module et au deuxième module pour recevoir respectivement le premier signal S1 et un deuxième signal S2 généré par le deuxième module.

Le premier module 61 comprend par exemple un diviseur de tension 65 adapté pour fournir une tension divisée U' proportionnelle à la tension non nulle U détectée. Avantageusement, la tension divisée U' forme le premier signal S1.

Le premier module 61 est avantageusement intégralement situé dans le logement 47, par exemple axialement entre la deuxième borne 55 et le support 45.

Selon un mode de réalisation particulier (non représenté), le premier module 61 est noyé dans l'enveloppe isolante 43.

Le premier module 61 et le deuxième module 63 sont avantageusement situés axialement, par rapport à la deuxième borne 55, du côté opposé à la première borne 53.

Le deuxième module 63 est adapté pour générer le deuxième signal S2 si le premier contact et le deuxième contact sont dans la configuration ouverte. Par exemple, le deuxième module 63 est situé en dessous du support 45, avantageusement dans un logement 142 qui intègre des composants raccordés à la partie basse tension du véhicule ferroviaire 1.

Le deuxième module 63 comprend un contact électrique auxiliaire 67 comportant une entrée 69 et une sortie 71, et est configuré pour être électriquement passant entre l'entrée et la sortie lorsque le premier contact et le deuxième contact sont dans la configuration ouverte, et pour être non passant électriquement lorsque le premier contact et le deuxième contact sont dans la configuration fermée. Ainsi, le deuxième signal S2 est lié au caractère passant du contact électrique auxiliaire 67.

Par exemple, le contact auxiliaire 67 est actionné mécaniquement par un mécanisme associé à la tige de commande 141, ou indirectement par un capteur de position.

L'unité logique 140 est avantageusement située dans le logement 142. L'unité logique 140 produit le signal de commande S si elle reçoit le premier signal S1 et le deuxième signal S2.

L'unité logique 140 est avantageusement constituée uniquement de circuits logiques.

Selon une variante, elle comporte une unité de calcul tel qu'un processeur.

Le fonctionnement du véhicule ferroviaire 1 va maintenant être décrit.

En fonctionnement normal du véhicule ferroviaire, le dispositif de captage 10 est en contact avec la ligne électrique 5. Le premier contact 57 et le deuxième contact 59 sont dans la configuration fermée, si bien qu'un courant électrique l s'écoule en provenance de la ligne d'alimentation via le dispositif de captage et le disjoncteur 20 jusqu'au circuit à haute tension 15. Le transformateur 30 alimente le circuit à basse tension 25.

Le courant électrique l entre dans le disjoncteur 20 par la première borne 53. Le courant s'écoule dans le premier contact 57, puis dans le deuxième contact 59 et sort par la deuxième borne 55 pour arriver dans le circuit à haute tension 15.

Si l'intensité du courant électrique l dépasse un seuil prédéterminé, le disjoncteur 20 disjoncte, c'est-à-dire que le premier contact 57 et le deuxième contact 59 sont déplacés de la configuration fermée à la configuration ouverte par l'actionneur 39. Plus précisément, dans l'exemple représenté, l'actionneur 39 déplace, via la tige 141, le deuxième contact 59 en translation axiale par rapport au premier contact 57 de manière à écarter le deuxième contact du premier contact axialement. Ceci a normalement pour effet d'interrompre la circulation du courant électrique l, car du fait du vide existant dans la chambre à vide 51, le premier contact et le deuxième contact sont électriquement isolés l'un de l'autre.

En cas de perte du vide dans la chambre à vide 51, bien que le premier contact et le deuxième contact soient dans la configuration ouverte, ils ne sont plus isolés électriquement l'un de l'autre, en tout cas pas suffisamment pour la différence de potentiel existant entre les deux contacts, typiquement de 25 kV AC.

Le deuxième contact 59 est alors à un potentiel élevé, si bien que la tension électrique non nulle U existe entre le deuxième contact et la masse. Le premier module 61 détecte l'existence de cette tension U et envoie le premier signal S1 à l'unité logique 140. Dans l'exemple représenté, le diviseur de tension 65 reçoit la tension électrique non nulle U et fournit la tension divisée U', qui constitue le premier signal S1.

Parallèlement, le deuxième module 63 détecte que le premier contact 57 et le contact 59 sont dans la configuration ouverte et se met lui-même à être passant électriquement, c'est-à-dire fermé entre l'entrée 69 et la sortie 71, ce qui constitue le deuxième signal S2 envoyé à l'unité logique 140.

L'unité logique 140, si elle reçoit le premier signal S1 et le deuxième signal S2, produit le signal de commande S. Le signal de commande S est reçu par l'actionneur 35 (figure 1). L'actionneur 35 agit alors sur le dispositif de captage 10 pour le déconnecter de la ligne d'alimentation 5. Dans l'exemple représenté, l'actionneur 35 abaisse le pantographe.

Grâce aux caractéristiques décrites ci-dessus, la détection d'une perte de vide dans l'interrupteur à vide 37 est plus robuste, et des mesures correctrices, ici l'abaissement du pantographe, sont prises immédiatement. Le système de commande 41 est en effet intégré au disjoncteur 20, et ne fait pas appel au système de pilotage (non représenté) du véhicule ferroviaire.

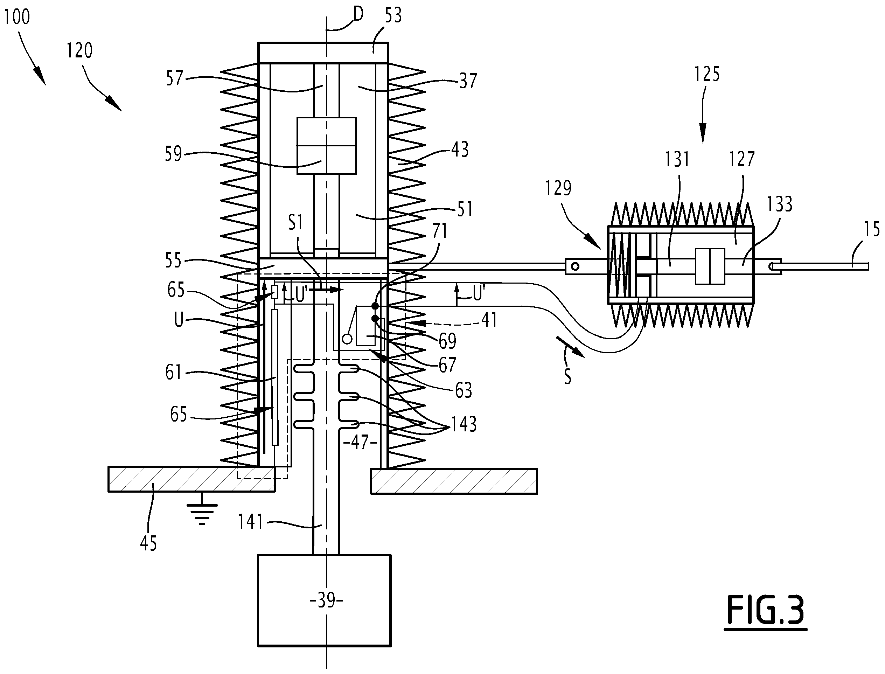

En référence à la figure 3, on va maintenant décrire un véhicule ferroviaire 100 selon un deuxième mode de réalisation de l'invention.

Le véhicule ferroviaire 100 comprend un disjoncteur 120, et un interrupteur commandé 125.

Le disjoncteur 120 est analogue au disjoncteur 20 représenté sur les figures 1 et 2. Les éléments similaires entre les disjoncteurs 20 et 120 portent les mêmes références numériques et ne seront pas décrits à nouveau. Seules les différences seront décrites en détail ci-après.

Dans ce mode de réalisation, le premier module 61 et le deuxième module 63 sont situés dans le logement 47.

Le deuxième module 63 est par exemple placé axialement en haut du logement 47, i.e. du côté de la borne 55. Le deuxième module 63 est relié au module 61 pour recevoir le premier signal S1, et est adapté pour produire le signal de commande S si le deuxième module 63 reçoit le premier signal S1 et le premier contact 57 et le deuxième contact 69 sont dans la configuration ouverte.

Par exemple, le deuxième module 63 est adapté pour transmettre le premier signal S1 qu'il reçoit, constitué ici par la tension divisée U', si le premier contact et le deuxième contact sont dans la configuration ouverte, le premier signal S1 transmis par le deuxième module 63 formant directement le signal de commande S.

Dit autrement, en l'absence de tension entre le deuxième contact 59 et le support 45, la tension U aux bornes du diviseur de tension 65 est nulle, et donc la tension divisée U' est également nulle, ce qu'il fait qu'il n'y a pas de signal de commande S (il est égal à 0 volt). Si au contraire il existe une différence de potentiel, la tension U est non nulle, et donc la tension divisée U' est également non nulle. Si l'interrupteur auxiliaire 67 est passant, la tension divisée U' est transmise et forme le signal de commande S, qui est une tension électrique non nulle.

L'interrupteur commandé 125 comporte par exemple un interrupteur à vide 127 analogue à l'interrupteur à vide 37, et un actionneur 129 connecté électriquement au système de commande 41 du disjoncteur 120.

L'interrupteur à vide 127 comprend un premier contact 131 et un deuxième contact 133 mobiles entre une configuration fermée (représentée sur la figure 3), dans laquelle l'interrupteur commandé 125 est électriquement passant, et une configuration ouverte (non représentée, mais qui se déduit de la figure 3 en écartant le premier contact et le deuxième contact l'un de l'autre), dans laquelle le premier contact 131 est à l'écart du deuxième contact 133.

Le premier contact 131 est connecté électriquement à la deuxième borne 55 du disjoncteur 120.

Le deuxième contact 133 est connecté électriquement au circuit à haute tension 15 du véhicule ferroviaire 100.

L'actionneur 129 est adapté pour déplacer le premier contact 131 et le deuxième contact 133 de la configuration fermée à la configuration ouverte s'il reçoit le signal de commande S en provenance du système de commande 41.

Dans l'exemple représenté, le système de commande 41 n'est pas relié à un actionneur du dispositif de captage, mais uniquement à l'actionneur 129 de l'interrupteur commandé 125.

Selon une variante non représentée, le système de commande 41 est en outre connecté à un actionneur de dispositif de captage, comme représenté sur la figure 1.

Le fonctionnement du véhicule ferroviaire 100 va maintenant être décrit.

Seul le fonctionnement du système de commande 41 diffère, ainsi que les conséquences du signal de commande S.

Lorsque l'interrupteur à vide 37 est dans la configuration fermée, la tension U est non nulle, mais le contact électrique auxiliaire 67 est non passant. En conséquence, le deuxième module 63 ne transmet pas la tension divisée U' et le signal de commande S est nul.

Lorsque le premier contact 57 et le deuxième contact 59 sont dans la configuration ouverte et qu'il n'y a pas de perte de vide dans la chambre à vide 51, la tension U est nulle. Le contact électrique auxiliaire 67 est passant et transmet la tension divisée U' également nulle, ce qui fait qu'il n'y a pas de signal de commande S produit.

En cas de perte de vide dans la chambre 51, la tension U devient non nulle, et la tension divisée U', également non nulle, est transmise par le deuxième module 63, ce qui forme le signal de commande S.

Le signal de commande S est reçu par l'actionneur 129, qui déplace le premier contact 131 et le deuxième contact 133 de l'interrupteur commandé 125 de la configuration fermée à la configuration ouverte. Ceci isole électriquement le circuit à haute tension 15 de la deuxième borne 55 du disjoncteur 120.

Ainsi, même si l'interrupteur à vide 37 est déficient, la perte de vide est détectée et a pour conséquence l'ouverture de l'interrupteur commandé 125, qui supplée à l'action de l'interrupteur à vide 37.

Le deuxième mode de réalisation a les mêmes avantages que le premier mode de réalisation. De plus, il permet de s'affranchir de l'unité logique 140. Le système de commande 41 est alors, de fait, une chaîne de relayage extrêmement fiable.

## Revendications

1. Disjoncteur (20 ; 120) comprenant un interrupteur à vide (37) comportant un premier contact (57) électrique et un deuxième contact (59) électrique propres à être, dans une configuration fermée du disjoncteur, en contact l'un avec l'autre pour permettre le passage d'un courant électrique (l) dans l'interrupteur à vide (37) et, dans une configuration ouverte du disjoncteur, à l'écart l'un de l'autre pour s'opposer au passage du courant électrique (l), le premier contact (57) étant destiné à être relié à une source de tension électrique (5),
**caractérisé en ce qu'**il comprend en outre un système de commande (41) adapté pour produire un signal de commande (S) si :
- le disjoncteur est dans la configuration ouverte, et
- une tension sensiblement non nulle (U) existe entre le deuxième contact (59) dudit interrupteur à vide (37) et un élément, notamment un support (45) du disjoncteur (20 ; 120), destiné à être relié à une masse électrique,
le système de commande (41) comprenant :
- un premier module (61) adapté pour générer un premier signal (S1) si la tension sensiblement non nulle (U) existe entre le deuxième contact (59) dudit interrupteur à vide (37) et l'élément destiné à être relié à la masse électrique, et
- un deuxième module (63) adapté pour détecter si le disjoncteur est dans la configuration ouverte,
le signal de commande (S) étant représentatif du fait que la tension non nulle (U) existe entre le deuxième contact (59) dudit interrupteur à vide (37) et la masse électrique, alors que le disjoncteur (20 ; 120) est dans la configuration ouverte.

2. Disjoncteur (20) selon la revendication 1, dans lequel :
- le deuxième module (63) est adapté pour générer un deuxième signal (S2) si le disjoncteur est dans la configuration ouverte, et
- le système de commande (41) comporte en outre une unité logique (140) reliée au premier module (61) et au deuxième module (63) pour recevoir respectivement le premier signal (S1) et le deuxième signal (S2), et configurée pour générer le signal de commande (S) si l'unité logique (140) reçoit le premier signal (S1) et le deuxième signal (S2).

3. Disjoncteur (120) selon la revendication 1, dans lequel le deuxième module (63) est relié au premier module (61) pour recevoir le premier signal (S1), et est adapté pour produire le signal de commande (S) si le deuxième module (63) reçoit le premier signal (S1) et le disjoncteur est dans la configuration ouverte.

4. Disjoncteur (120) selon la revendication 3, dans lequel le deuxième module (63) est adapté pour transmettre le premier signal (S1) si le premier contact (57) et le deuxième contact (59) sont dans la configuration ouverte, le premier signal (S1) transmis par le deuxième module (63) formant le signal de commande (S).

5. Disjoncteur (20 ; 120) selon l'une quelconque des revendications 1 à 4, dans lequel le premier module (61) comprend un diviseur de tension (65) adapté pour fournir une tension divisée (U') proportionnelle à la tension sensiblement non nulle (U) détectée, la tension divisée (U') formant le premier signal (S1).

6. Disjoncteur (20 ; 120) selon l'une quelconque des revendications 1 à 5, dans lequel le deuxième module (63) comprend un contact électrique auxiliaire (67) comportant une entrée (69) et une sortie (71), le contact électrique auxiliaire (67) étant configuré pour être électriquement passant entre l'entrée (69) et la sortie (71) lorsque le disjoncteur est dans la configuration ouverte, et non passant électriquement lorsque le disjoncteur est dans la configuration fermée.

7. Disjoncteur (20 ; 120) selon l'une quelconque des revendications 1 à 6, comportant une enveloppe isolante (43) délimitant un logement (47) dans lequel l'interrupteur à vide (37) est au moins partiellement reçu, le premier module (61) et le deuxième module (63) étant situés dans le logement.

8. Disjoncteur (20 ; 120) selon l'une quelconque des revendications 1 à 7, comportant une enveloppe isolante (43), dans lequel :
- l'enveloppe isolante (43) présente une forme allongée selon un axe (D),
- l'interrupteur à vide (37) comprend une première borne (53) en contact électrique avec le premier contact (57), et une deuxième borne (55) en contact électrique avec le deuxième contact (59),
- le premier module (61) et le deuxième module (63) sont situés axialement, par rapport à la deuxième borne (55), du côté opposé à la première borne (53).

9. Véhicule ferroviaire (1 ; 100) comprenant un dispositif de captage (10) de courant électrique à partir d'une ligne d'alimentation (5), et un disjoncteur (20 ; 120) selon l'une quelconque des revendications 1 à 8, le premier contact (57) étant connecté électriquement au dispositif de captage (10) pour recevoir le courant électrique dans la configuration fermée, le véhicule ferroviaire (1 ; 100) comprenant :
- un actionneur (35) connecté au système de commande (41) pour recevoir le signal de commande (S), l'actionneur (35) étant adapté pour déconnecter le dispositif de captage (10) de ladite ligne d'alimentation (5) si l'actionneur (35) reçoit le signal de commande (S), et/ou
- un interrupteur commandé (125) connecté électriquement au deuxième contact (59) et à un réseau électrique (15) du véhicule ferroviaire, l'interrupteur commandé (125) étant mobile entre une configuration fermée, dans laquelle le réseau électrique est connecté électriquement au deuxième contact (59) via l'interrupteur commandé (125), et une configuration ouverte, dans laquelle le réseau électrique (15) est isolé électriquement du deuxième contact (59), l'interrupteur commandé (125) étant connecté au système de commande (41) pour recevoir le signal de commande (S), et étant adapté pour passer de sa configuration fermée à sa configuration ouverte si l'interrupteur commandé (125) reçoit le signal de commande (S).

10. Véhicule ferroviaire (1 ; 100) selon la revendication 9, dans lequel l'interrupteur commandé (125) comprend un interrupteur à vide (127), deux contacts (131, 133) électriques, et un actionneur (129) configuré pour déplacer l'interrupteur commandé (125) de sa configuration fermée à sa configuration ouverte si l'actionneur (129) reçoit le signal de commande (S).

## Patentansprüche

1. Schutzschalter (20; 120), umfassend einen Vakuumschalter (37), umfassend einen ersten elektrischen Kontakt (57) und einen zweiten elektrischen Kontakt (59), die geeignet sind, um in einer geschlossenen Konfiguration des Schutzschalters miteinander in Kontakt zu sein, um den Durchgang eines elektrischen Stroms (I) durch den Vakuumschalter (37) zu ermöglichen, und in einer offenen Konfiguration des Schutzschalters voneinander beabstandet zu sein, um sich einem Durchgang des elektrischen Stroms (l) zu widersetzen, wobei der erste Kontakt (57) dazu bestimmt ist, mit einer elektrischen Spannungsquelle (5) verbunden zu sein,
**dadurch gekennzeichnet, dass** er ferner ein Steuersystem (41) umfasst, das angepasst ist, um ein Steuersignal (S) zu erzeugen, wenn:
- der Schutzschalter in der offenen Konfiguration ist und
- eine im Wesentlichen von Null verschiedene Spannung (U) zwischen dem zweiten Kontakt (59) des Vakuumschalters (37) und einem Element, insbesondere einem Träger (45) des Schutzschalters (20; 120), vorhanden ist, der dazu bestimmt ist, mit einer elektrischen Masse verbunden zu werden,
das Steuersystem (41) umfassend:
- ein erstes Modul (61), das angepasst ist, um ein erstes Signal (S1) zu erzeugen, wenn die im Wesentlichen von Null verschiedene Spannung (U) zwischen dem zweiten Kontakt (59) des Vakuumschalters (37) und dem Element, das mit der elektrischen Masse verbunden werden soll, vorhanden ist, und
- ein zweites Modul (63), das angepasst ist, um zu erfassen, ob der Schutzschalter in der offenen Konfiguration ist,
wobei das Steuersignal (S) repräsentativ dafür ist, dass die Nicht-Null-Spannung (U) zwischen dem zweiten Kontakt (59) des Vakuumschalters (37) und der elektrischen Masse vorhanden ist, während der Schutzschalter (20; 120) in der offenen Konfiguration ist.

2. Detektor (20) nach Anspruch 1, wobei:
- das zweite Modul (63) angepasst ist, um ein zweites Signal (S2) zu erzeugen, wenn der Schutzschalter in der offenen Konfiguration ist, und
- das Steuersystem (41) ferner eine Logikeinheit (140) umfasst, die mit dem ersten Modul (61) und dem zweiten Modul (63) verbunden ist, um das erste Signal (S1) bzw. das zweite Signal (S2) zu empfangen, und die konfiguriert ist, um das Steuersignal (S) zu erzeugen, wenn die Logikeinheit (140) das erste Signal (S1) und das zweite Signal (S2) empfängt.

3. Schutzschalter (120) nach Anspruch 1, wobei das zweite Modul (63) mit dem ersten Modul (61) verbunden ist, um das erste Signal (S1) zu empfangen, und angepasst ist, um das Steuersignal (S) zu erzeugen, wenn das zweite Modul (63) das erste Signal (S1) empfängt und der Schutzschalter in der offenen Konfiguration ist.

4. Schutzschalter (120) nach Anspruch 3, wobei das zweite Modul (63) angepasst ist, um das erste Signal (S1) zu übertragen, wenn der erste Kontakt (57) und der zweite Kontakt (59) in der offenen Konfiguration sind, wobei das erste Signal (S1), das durch das zweite Modul (63) übertragen wird, das Steuersignal (S) bildet.

5. Schutzschalter (20; 120) nach einem der Ansprüche 1 bis 4, wobei das erste Modul (61) einen Spannungsteiler (65) umfasst, der angepasst ist, um eine geteilte Spannung (U') bereitzustellen, die proportional zu der erfassten, im Wesentlichen von Null verschiedenen Spannung (U) ist, wobei die geteilte Spannung (U') das erste Signal (S1) bildet.

6. Schutzschalter (20; 120) nach einem der Ansprüche 1 bis 5, wobei das zweite Modul (63) einen elektrischen Hilfskontakt (67) umfasst, umfassend einen Eingang (69) und einen Ausgang (71), wobei der elektrische Hilfskontakt (67) konfiguriert ist, um zwischen dem Eingang (69) und dem Ausgang (71) elektrisch leitend zu sein, wenn der Schutzschalter in der offenen Konfiguration ist, und elektrisch nicht leitend ist, wenn der Schutzschalter in der geschlossenen Konfiguration ist.

7. Schutzschalter (20; 120) nach einem der Ansprüche 1 bis 6, umfassend eine isolierende Hülle (43), die eine Aufnahme (47) begrenzt, in der der Vakuumschalter (37) zumindest teilweise aufgenommen ist, wobei sich das erste Modul (61) und das zweite Modul (63) in der Aufnahme befinden.

8. Schutzschalter (20; 120) nach einem der Ansprüche 1 bis 7, umfassend eine isolierende Hülle (43), wobei:
- die isolierende Hülle (43) eine längliche Form entlang einer Achse (D) aufweist,
- der Vakuumschalter (37) einen ersten Anschluss (53) in elektrischem Kontakt mit dem ersten Kontakt (57) und einen zweiten Anschluss (55) in elektrischem Kontakt mit dem zweiten Kontakt (59) umfasst,
- das erste Modul (61) und das zweite Modul (63) axial, in Bezug auf den zweiten Anschluss (55), auf der gegenüberliegenden Seite des ersten Anschlusses (53) angeordnet sind.

9. Schienenfahrzeug (1; 100), umfassend eine Aufnahmevorrichtung (10) von elektrischem Strom aus einer Versorgungsleitung (5) und einen Schutzschalter (20; 120) nach einem der Ansprüche 1 bis 8, wobei der erste Kontakt (57) elektrisch mit der Aufnahmevorrichtung (10) verbunden ist, um den elektrischen Strom in der geschlossenen Konfiguration zu empfangen, das Schienenfahrzeug (1; 100) umfassend:
- einen Aktuator (35), der mit dem Steuersystem (41) verbunden ist, um das Steuersignal (S) zu empfangen, wobei der Aktuator (35) angepasst ist, um die Aufnahmevorrichtung (10) von der Versorgungsleitung (5) zu trennen, wenn der Aktuator (35) das Steuersignal (S) empfängt, und/oder
- einen gesteuerten Schalter (125), der elektrisch mit dem zweiten Kontakt (59) und mit einem Stromnetz (15) des Schienenfahrzeugs verbunden ist, wobei der gesteuerte Schalter (125) zwischen einer geschlossenen Konfiguration, in der das Stromnetz über den gesteuerten Schalter (125) elektrisch mit dem zweiten Kontakt (59) verbunden ist, und einer offenen Konfiguration, in der das Stromnetz (15) von dem zweiten Kontakt (59) elektrisch isoliert ist, beweglich ist, wobei der gesteuerte Schalter (125) mit dem Steuersystem (41) verbunden ist, um das Steuersignal (S) zu empfangen, und angepasst ist, um von seiner geschlossenen Konfiguration in seine offene Konfiguration zu wechseln, wenn der gesteuerte Schalter (125) das Steuersignal (S) empfängt.

10. Schienenfahrzeug (1; 100) nach Anspruch 9, wobei der gesteuerte Schalter (125) einen Vakuumschalter (127), zwei elektrische Kontakte (131, 133) und einen Aktuator (129) umfasst, der konfiguriert ist, um den gesteuerten Schalter (125) von seiner geschlossenen Konfiguration in seine offene Konfiguration zu bewegen, wenn der Aktuator (129) das Steuersignal (S) empfängt.

## Claims

1. A circuit breaker (20 ; 120) comprising a vacuum switch (37) including a first electrical contact (57) and a second electrical contact (59) suitable, in a closed configuration of the circuit breaker, for being in contact with each other to allow an electric current (l) to flow through the vacuum switch (37) and, in an open configuration of the circuit breaker, for being away from each other to oppose the flow of the electric current (I), the first contact (57) being designed to be connected to a source of electric voltage (5),
**characterised in that** it further comprises a command system (41) adapted to produce a command signal (S) if:
- the circuit breaker is in the open configuration, and
- a substantially non-zero voltage (U) exists between the second contact (59) of said vacuum switch (37) and an element, in particular a support (45) of the circuit breaker (20; 120), intended to be connected to an electrical earth,
the cooling system (41) comprising:
- a first module (61) adapted to generate a first signal (S1) if the substantially non-zero voltage (U) exists between the second contact (59) of said vacuum switch (37) and the element to be connected to electrical ground, and
- a second module (63) adapted to detect whether the circuit breaker is in the open configuration,
the command signal (S) being representative of the fact that the non-zero voltage (U) exists between the second contact (59) of said vacuum switch (37) and electrical ground, while the circuit breaker (20; 120) is in the open configuration.

2. The assembly (20) according to claim 1, wherein:
- the second module (63) is adapted to generate a second signal (S2) if the circuit breaker is in the open configuration, and
- the command system (41) further comprises a logic unit (140) connected to the first module (61) and the second module (63) for receiving the first signal (S1) and the second signal (S2) respectively, and configured to generate the command signal (S) if the logic unit (140) receives the first signal (S1) and the second signal (S2).

3. A circuit breaker (120) according to claim 1, wherein the second module (63) is connected to the first module (61) to receive the first signal (S1), and is adapted to produce the command signal (S) if the second module (63) receives the first signal (S1) and the circuit breaker is in the open configuration.

4. A circuit breaker (120) according to claim 3, wherein the second module (63) is adapted to transmit the first signal (S1) if the first contact (57) and the second contact (59) are in the open configuration, the first signal (S1) transmitted by the second module (63) forming the command signal (S).

5. A circuit breaker (20; 120) according to any of claims 1 to 4, wherein the first module (61) comprises a voltage divider (65) adapted to provide a divided voltage (U') proportional to the sensed substantially non-zero voltage (U), the divided voltage (U') forming the first signal (S1).

6. A circuit breaker (20; 120) according to any one of claims 1 to 5, wherein the second module (63) comprises an auxiliary electrical contact (67) having an input (69) and an output (71), the auxiliary electrical contact (67) being configured to be electrically conductive between the input (69) and the output (71) when the circuit breaker is in the open configuration, and not electrically conductive when the circuit breaker is in the closed configuration.

7. A circuit breaker (20; 120) according to any one of claims 1 to 6, comprising an insulating casing (43) delimiting a housing (47) in which the vacuum switch (37) is at least partially received, the first module (61) and the second module (63) being located in the housing.

8. A circuit breaker (20; 120) according to any one of claims 1 to 7, comprising an insulating jacket (43), in which:
- the insulating jacket (43) has an elongated shape along an axis (D),
- the vacuum switch (37) comprises a first terminal (53) in electrical contact with the first contact (57), and a second terminal (55) in electrical contact with the second contact (59),
- the first module (61) and the second module (63) are located axially, with respect to the second terminal (55), on the side opposite the first terminal (53).

9. A railway vehicle (1; 100) comprising a device (10) for collecting electric current from a supply line (5), and a circuit breaker (20; 120) according to any one of claims 1 to 8, the first contact (57) being electrically connected to the collection device (10) to receive the electric current in the closed configuration, the railway vehicle (1; 100) comprising
- an actuator (35) connected to the command system (41) to receive the command signal (S), the actuator (35) being adapted to disconnect the collection device (10) from said supply line (5) if the actuator (35) receives the command signal (S), and/or
- a controlled switch (125) electrically connected to the second contact (59) and to an electrical network (15) of the railway vehicle, the controlled switch (125) being movable between a closed configuration, in which the electrical network is electrically connected to the second contact (59) via the controlled switch (125), and an open configuration, in which the electrical network (15) is electrically isolated from the second contact (59), the controlled switch (125) being connected to the command system (41) to receive the command signal (S), and being adapted to switch its closed configuration to its open configuration if the controlled switch (125) receives the command signal (S).

10. A railway vehicle (1; 100) according to claim 9, wherein the controlled switch (125) comprises a vacuum switch (127), two electrical contacts (131, 133), and an actuator (129) configured to move the controlled switch (125) from its closed configuration to its open configuration if the actuator (129) receives the command signal (S).
